# EUROPEAN PATENT APPLICATION

(11) **EP 1 069 175 A2**
(43) Date of publication of application: **17.01.2001**
(21) Application number: 00305929.2
(22) Date of filing: 12.07.2000
(51) Int. Cl.: C10L 3/00, C10J 3/00

(54) **Gas utilily**

(30) Priority: 12.07.1999 GB 9916256; 03.02.2000 GB 0002502
(71) Applicant: Scotoil Group plc, Links Road, Aberdeen AB11 5QQ (GB)
(72) Inventor: Davidson, Ian David Farquhar, Aberdeen AB1 7UD (GB)
(74) Representative: Ede, Eric

(57) **Abstract**

A gaseous fuel is obtained by introducing a combustible synthetic gas, obtained from gasification of substantially dry waste materials, to a gaseous fuel obtained from a fossil fuel source, the said gas obtained from waste materials being collected in an accumulator to stabilise the composition of the gas within a range of calorific values rendering it suitable as a fuel for use in a combustion process, e.g. for use in plant for generating electricity or heating purposes, wherein the waste materials used in the gasification step comprise materials selected from pulped waste newspaper, optionally processed to remove inks and colorants, municipal solids waste (MSW), wet wood chips and shavings from lumber processing operations, waste packaging, degradable plastics, straw, cereal crop by-products, waste materials from grain distillation and maltings, and molasses.

## Description

This invention relates to the production of a gaseous fuel, and in particular, to a commercially useful process that consumes substantially dry waste materials. The process can be readily adapted to use in the generation of electricity, and thus satisfies broad demands for power generation.

There is an ever increasing demand for energy throughout the world and in particular a need for a fuel that satisfies current environmental concerns and also addresses issues of cost in relation to energy returns. Whilst there are a variety of potential sources of energy, by adopting the power of wind, by way of wind turbine farms, the rivers and oceans, by hydro-electric and wave-power systems, use of solar and geothermal energy, and nuclear power for example, the most widely used source of transferable energy is fossil fuels which usually require intensive processing.

Various problems are associated with the energy industry, including capital expense in the equipment, environmental impact such as noise, pollution by way of effluents and discharges to atmosphere, the physical presence of the power plant on what might otherwise be open country-side, farm land or suburban "green-belt" and power distribution. Particular attention has been paid in recent years to the discharges to the environment, especially atmospheric pollution arising from burning of fossil fuels which is currently considered to represent a contributory factor in global warming. Since it has long been recognised that the natural sources of organic fuels such as coal, oil and natural gas are finite resources and there is considerable risk and increasing expense associated with recovering such fuels, attention has turned to synthetic fuels and also attempts have been made to adopt renewable and recyclable energy sources.

There is a strong preference for use of natural gas as a fuel due to the relative ease with which it may transported when compared with solid fuels, the lack of solid residues, contaminants and by-products of noxious gases found with coal and the heavier oil fuels, the predictability in burning characteristics and the simplicity associated with the burner devices required for its use. Synthetic gases have been used, and methane generators have also been considered as potential alternative gaseous fuels. Furthermore, attempts have been made to obtain a gaseous fuel from waste materials such as wood shavings, wood chips, waste paper, farm waste, and garbage but this has mainly had the primary purpose of decreasing the volume of waste material which would generally be disposed of to landfill, with the secondary purpose of attempting to recover valuable energy from the waste.

One of the difficulties of this type of energy recovery is that the transition of solid to gas is not uniform. The quality and chemical components of the gas that is produced can vary widely and is dependant on the waste being processed. In particular this variability of the gaseous product recovered by the waste processing treatment translates into an energy range variance such that waste calorific value (c.v.) can vary from 0-50 MJ/kg. Furthermore, the water content of the waste has a significant impact on the gas that is produced. Hence the resultant "syngas" (gas produced from waste) can widely vary in quality making it difficult to adopt it as a fuel for an automated or large scale power plant having a heavy energy demand such as an electrical power generating station.

In DE-A-19715646 (Appln. No.1015646 A) there is proposed a waste conversion process for recycling organic household refuse in an anaerobic fermentation reaction chamber using bacteria to generate a bio-gas which is used to fuel an electricity generator from which effluent heat warms the fermentation reactor, and the residual bio-mass is de-watered and dried for use as compost or fertiliser.

Another bio-mass based gasification and combustion process is described in ES-A-2086262, wherein thermal decomposition of the bio-mass provides, by heat exchange a means of generating hot and superheated water and steam, and gas which after storage to settle entrained particles is converted by a combustion engine to electrical energy.

A further process for conversion of waste plastics and oils to electrical energy is proposed in JP-A-7279622, which involves supply of air in primary and secondary combustion stages, the latter with added water, to generate explosive pressures to rotate a turbine at high speed.

The scale of plant for gasification of dry waste arising from industry, commerce and domestic sources to provide an output of syngas providing energy comparable to the energy return from natural gas would have to be considerably larger than is currently considered commercially feasible. This is because the syngas is relatively energy poor in comparison with natural gas.

The syngas obtainable from current processing of dry waste materials is not to be confused with older synthetic gases, such as synthetic natural gas (SNG). The processes for obtaining SNG involve either (i) a coal gasification process requiring catalysts, high temperatures and pressures wherein the coal is directly hydrogenated to provide a gas of about 85% methane and 15% ethane, or (ii) by hydrogenolysis of coal or steam-reforming of naphtha to form synthesis gas (mainly carbon monoxide and hydrogen) which can be enriched with methane to form SNG. Oil shale was a popular source for synthetic gases for a period of time. However, each of these processes is energy expensive, utilises a diminishing natural resource and the balance between the commercial limitations thereof and benefits in terms of energy output are such that they have not been widely adopted.

Discussion of syngas production occurs widely in the literature. There is a review of the potential for obtaining liquid and gaseous fuels from biotechnology, e.g. ethanol and methane production in FEMS Microbiol. Rev. (**16**, 2-3, 111-42) 1995; Kosaric, N. and Velikonja, J. Also the production of syngas from biomass-fermentation industry waste disposal by pyrolysis with production of hydrogen-enriched synthesis gas biogas for use as fuel is discussed in Bioresource Technol. (**48**, 2, 119-26) 1994, Maschio, G., Lucchesi, A. and Stoppato, G.

The process of energy production needs a certain uniformity of energy supply to ensure that the equipment designed to common industry standards can function. The volume, pressure and c.v. have to be within the operational parameters of the conversion equipment. Traditionally this has been managed by the addition of known high value c.v. materials such as oil or solvent in the waste process or addition of natural gas with the syngas.

An object of the present invention is to obviate or mitigate at least some of the problems associated with supply of fuels containing gaseous components obtained from waste materials.

Thus according to the present invention there is provided a fuel production method comprising the processing of waste materials including gasification thereof to obtain a gas having a calorific value enabling it to be used as a fuel component, collecting said gas in an accumulator to stabilise the composition thereof, especially with regard to thermal efficiency, and selectively introducing that accumulated gas to a gaseous fuel supply and distribution system.

An advantage of this approach is that the waste processing plant for producing the gas from waste can be of a relatively modest scale adapted to suit the needs of a local gaseous fuel consumer or to augment the capacity of a natural gas supply and distribution system into which the output of the waste processing plant may be linked.

Accordingly, the invention provides according to one aspect, a process for providing a gaseous fuel by introducing a combustible gas obtained from waste materials to a gaseous fuel obtained from a fossil fuel source e.g. natural gas or oil derived gaseous product, characterised in that the gas obtained from waste materials is collected in an accumulator to stabilise the composition of the gas within a range of calorific values rendering it suitable as a fuel for use in a combustion process.

Optionally, the gas obtained from waste materials i.e. the synthetic gas may be introduced to a gaseous fuel obtained from a fossil fuel source and both gases collected in an accumulator to stabilise the composition of the resulting collected gases.

Such an approach means that peak demands for gas can be more economically satisfied using existing equipment and cheaper fuels. The use of cheaper fuel is enabled by volume blending of the syngas to equilibrate the c.v. of the syngas and hence impart uniformity to the gas supply. This effectively allows wider variation in feedstock and makes the process far more suitable to the generation of power from a widely variable feedstock ― waste. Thus using a relatively cheap syngas generating plant capable of processing a wide range of waste materials, each generating variable quality of syngas, and buffering the supply of such gases into an intermediate accumulation stage, enables a more consistent feed of syngas to the combustion stage of the generating apparatus. In turn this leads to a improved management of energy demands, improved consumer supply and improved cost efficiencies.

Therefore, the option of volume blending i.e. the storage of a large quantity of syngas effectively increases the commercial viability of any gas-fuelled energy conversion business as well as greatly reducing the environmental impact of the operation. Implementation of this invention would reduce the requirement for virgin materials such as natural gas or waste materials that could be more effectively recycled such as oils or solvents. Consequently, the flexibility offered by the buffered volume blending of waste generated syngases by accumulation for use on demand means that such a process should be able to cope with the predicted wide variations in the quality of feed material and still provide a basis for fuelling a system that can be operated under normal operating conditions, including jacking up generation to instantly meet surges in demand. It is the failure of current systems to meet this requirement that has lead to their commercial failure.

According to another aspect of the present invention there is provided a method of generating electricity comprising the processing of waste materials to obtain a gas having a calorific value enabling it to be used as a fuel component, collecting said gas in an accumulator to stabilise the composition thereof, especially with regard to thermal efficiency, and selectively introducing that accumulated gas to the fuel supply of a combustion device forming part of apparatus for generating electricity according to a phased sequence of delivery synchronised with demand.

An advantage of this revolutionary approach is that the waste processing plant for producing the gas does not need to be of excessive size to meet the demands of the electricity generating apparatus. In a typical consumer demand cycle, peak needs are to be satisfied in only a few hours in every 24 hour period. Thus accumulation of gas in periods of low need can be selectively delivered to fuel the heavier demands on the generating apparatus at peak times.

According to a further aspect of the invention, there is provided a process of generating electricity by combustion of a gaseous fuel and conversion of energy released by the combustion process to electrical energy comprising, operating a plurality of electricity generating means selectively according to demand, by introducing a gas obtained from waste materials to the fuel supply thereof, characterised in that the gas obtained from waste materials is collected in an accumulator to stabilise the composition of the gas within a range of calorific values rendering it suitable as fuel for the combustion process.

Preferably, the waste materials used in the gasification plant comprise materials selected from pulped waste newspaper, optionally processed to remove inks and colorants, municipal solids waste (MSW), wet wood chips and shavings from lumber processing operations, waste packaging, degradable plastics, straw, cereal crop by-products, waste materials from grain distillation and maltings, molasses, etc. These materials are preferably de-watered and /or treated in a manner generally known *per se* to obtain substantially dry waste materials.

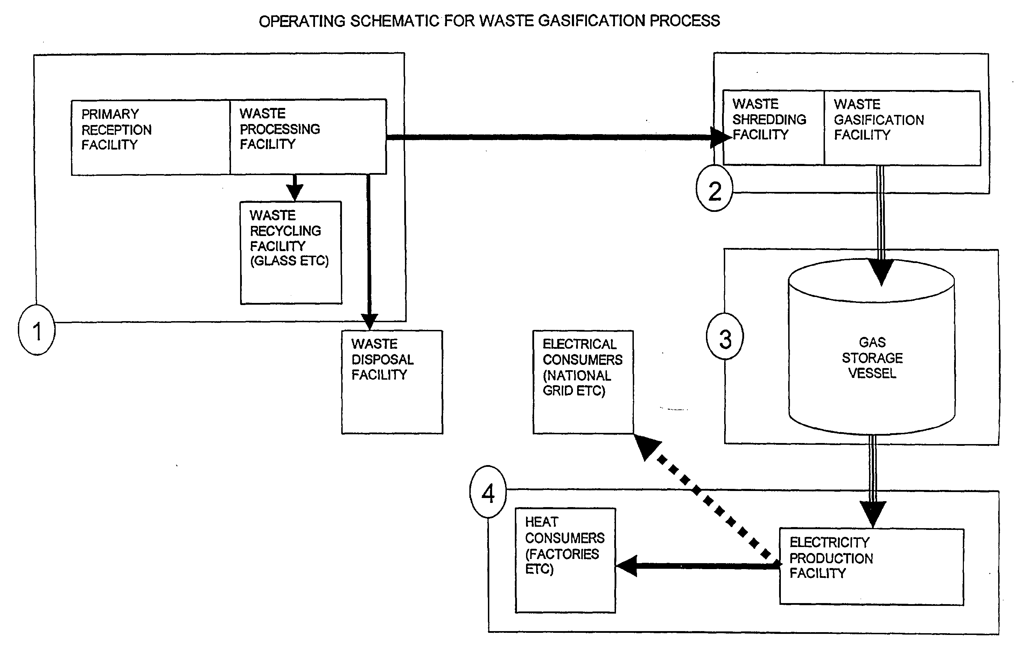

In the accompanying drawing a schematic production process is represented. Such a process is described in more detail below.

A waste processing plant **1** for producing dry waste delivers such waste to gasification plant **2** which includes a waste-sizing facility, e.g. shredding, to facilitate gasification. The synthetic gas produced thereby is collected in accumulator **3** for subsequent distribution through pipe network to a combustion device at a consumer's site e.g. an electrical energy generating power plant **4**. Optionally the synthesised gas is distributed straight after production and collected at the user's site for stabilisation purposes prior to consumption as a fuel in a combustion device, e.g. a heating plant at a factory.

The following materials are considered as suitable for the process: pulped waste newspaper, optionally processed to remove inks and colorants, municipal solids waste (MSW), wet wood chips and shavings from lumber processing operations, waste packaging, degradable plastics, straw, cereal crop by-products, waste materials from grain distillation and maltings, molasses etc. These materials are de-watered and /or treated in a manner generally known *per se* to obtain substantially dry waste materials (referred to as "dry waste" herein).

The technology associated with gasification of dry waste has advanced in recent years and so a person skilled in the art has available an existing stock of knowledge on waste re-processing and biological treatment of waste to generate biogas or syngas, and may adopt a number of proposals for such a gasification process, or a combination thereof. In the process of this invention such a process is adopted to yield a gaseous product which typically exhibits a calorific value of up to about 50 MJ/kg.

The syngas obtained is then either piped into a distribution system for collection at a point of use e.g. at a power plant where it is accumulated for a predetermined time in a large volume vessel before use, or it may be collected in a buffer zone before distribution. A typical vessel for such accumulation of the syngas could have a capacity of about 1.5 X 10⁵ m³. Holding of the gas in such a vessel allows the natural diffusion and dynamic mixing of the gases according to known mechanisms predictable according to the gas laws and leading ultimately to an equilibrium mixture of a generally uniform composition. Once the gas has been allowed to equilibrate in this way its c.v. will be sufficiently stabilised as to permit predictable performance of a combustion device relying on such gas as a fuel. The existing UK gas network includes gas reservoirs which became largely obsolete when the switch from town gas to natural gas was made and these may be usefully employed in performance of the present invention.

Referring more particularly to the accompanying schematic drawing, the invention may be operated in the following way.

A waste processing facility (1) is operated to separate incoming wastes into appropriate streams. Materials that cannot be recycled or used as a fuel would be sent to landfill. Materials which have no fuel value but have a recycled value could be recycled on site (shown) or sent for onward processing (not shown). A waste shredding facility (2) would shred the material to reduce the fuel size to increase the conversion efficiency of the gasification plant. The gasification process then pipes the produced syngas to a gas-holder (3). The gas-holder serves to regulate the gas volume and calorific value (c.v.). This allows a supply of a regulated gas, known value and c.v. This regulated gas can be delivered on demand. The gas may be usefully employed in electricity production or for heating appliances. Any heat produced may be used in a network type of heating system to local industrial uses.

The regulation effect and the gas holder volume allows the ability not only to regulate the gas but also to 'control' the properties, i.e. the gasification of high c.v. wastes such as oils or solvents to obtain a proportionally higher c.v. in the produced gas. Hence the storage can effectively regulate the gas quality by providing a stable gas supply from a widely variable feedstock.

The processing stages 1 through 4 can also by their discrete functional nature be at different sites or consolidated to a single site. The individual site layout would therefore not be dependent on optimal conditions and would maximise the available facilities by adding a valuable resource to the system. The opportunity to adopt existing gas-storage facilities within a traditional gas distribution network as part of the system according to the invention represents a significant cost saving bonus. In the case where no such infrastructure were present the aforesaid processing stages could be implemented in a single cohesive unit which would effectively cross support with heat and power supply to increase the individual efficiencies.

Operation of energy conversion plant according to the proposal herein introduces the following beneficial features:
1) Waste treatment can be completely separated from power generation, the respective operations being at sites remote from each other and if necessary the buffer equilibrium phase of the gasification operation may be located at a third site within the gas distribution network dedicated only to accumulation, storage and stabilisation of the quality of the gas. This enables planned production runs and improved economic efficiency from the capital intensive equipment necessary in gasification of dry waste;
2) Completely managed scheduling of gas supply to satisfy demand and extend the value of the "fossil" ―sourced bulk gaseous components of the regulated fuel;
3) Increased power output during peak demand periods without increasing the gas synthesis production rate by reliance on the buffer zone inherent in the system to accommodate the additional gas demand:
4) Optimisation of waste fuel delivery taking account of local traffic, access and environmental impact on residential areas.

## Claims

1. A fuel production method comprising the processing of dry waste materials including gasification thereof to obtain a synthetic gas having a calorific value enabling it to be used as a fuel component, collecting said gas in an accumulator to stabilise the composition thereof, especially with regard to thermal efficiency, and selectively introducing that accumulated gas to a gaseous fuel supply and distribution system.

2. A process for providing a gaseous fuel by introducing a combustible synthetic gas, obtained from gasification of dry waste materials, to a gaseous fuel obtained from a fossil fuel source, characterised in that the gas obtained from waste materials is collected in an accumulator to stabilise the composition of the gas within a range of calorific values rendering it suitable as a fuel for use in a combustion process.

3. A process according to claim 2, wherein the synthetic gas is introduced to a gaseous fuel obtained from a fossil fuel source and both gases are collected in an accumulator to stabilise the composition of the resulting collected gases.

4. A method of generating electricity comprising the processing of dry waste materials including the gasification thereof to obtain a gas having a calorific value enabling it to be used as a fuel component, collecting said gas in an accumulator to stabilise the composition thereof, especially with regard to thermal efficiency, and selectively introducing that accumulated gas to the fuel supply of a combustion device forming part of apparatus for generating electricity according to a phased sequence of delivery synchronised with demand.

5. A process of generating electricity by combustion of a gaseous fuel and conversion of energy released by the combustion process to electrical energy comprising, operating a plurality of electricity generating means selectively according to demand, by introducing a gas obtained from waste materials to the fuel supply thereof, characterised in that the gas obtained from waste materials is collected in an accumulator to stabilise the composition of the gas within a range of calorific values rendering it suitable as fuel for the combustion process.

6. A process according to any one of claims 1 to 5, wherein the waste materials used in the gasification step comprise materials selected from pulped waste newspaper, optionally processed to remove inks and colorants, municipal solids waste (MSW), wet wood chips and shavings from lumber processing operations, waste packaging, degradable plastics, straw, cereal crop by-products, waste materials from grain distillation and maltings, and molasses.

7. A process according to claim 6, wherein said materials are de-watered and /or treated in a manner generally known *per se* to obtain substantially dry waste materials before gasification.
